# EUROPÄISCHE PATENTANMELDUNG

(11) **EP 2 852 182 A1**
(43) Veröffentlichungstag der Anmeldung: **25.03.2015**
(21) Anmeldenummer: 14184104.9
(22) Anmeldetag: 09.09.2014
(51) Int. Cl.: H04R 25/00, H01M 2/10

(54) **Hörinstrument mit Batteriefachschalter**

(30) Priorität: 24.09.2013 DE 102013219135
(71) Anmelder: Siemens Medical Instruments Pte. Ltd., Singapore 139959 (SG)
(72) Erfinder: Flaig, Uwe, 90537 Feucht (DE); Kral, Holger, 90766 Fürth (DE)
(74) Vertreter: Maier, Daniel Oliver

(57) **Zusammenfassung**

Die Erfindung betrifft ein Hörinstrument mit einem Batteriefachschalter, der ein Ein-/Aus-Schalten des Hörinstruments beim Schließen und Öffnen des Batteriefachs bewirkt. Zu diesem Zweck wird durch den Batteriefachschalter der elektrische Kontakt zur Batterie beim Schließen und Öffnen des Batteriefachs hergestellt und unterbrochen. Ein Grundgedanke der Erfindung besteht darin, eine im Bereich des Batteriefachs vorgesehene An-/Aus-Kontur und einen entsprechend geformte Batteriekontakteinrichtung zu verwenden, deren Gestalt so aufeinander abgestimmt ist, dass der Abhebe-Bereich zum Abheben der Batteriekontakteinrichtung von der Batterie und der Kontakt-Bereich der Batteriekontakteinrichtung voneinander getrennt sind. Die Batteriekontakteinrichtung hat demnach zwei spezielle, voneinander getrennte Bereiche, einen Abhebe-Bereich und einen Kontakt-Bereich. Beide Bereiche können jeweils eigens gestaltet werden, um auf der einen Seite die Abnutzung der An-/Aus-Kontur zu reduzieren und auf der anderen Seite eine sichere elektrische Kontaktierung der Batterie dauerhaft zu gewährleisten. Durch die Erfindung kann vorteilhafter Weise ein Abhebe-Bereich großer Fläche vorgesehen werden, wodurch der mechanische Druck auf die An-/Aus-Kontur auf eine größere Fläche verteilt und somit reduziert wird; dadurch wird der Reibungsverschleiß verringert. Durch eine geeignete Gestaltung der An-/Aus-Kontur kann zudem eine einzige Ausformung in der Batteriekontakteinrichtung ausreichend sein, um sowohl die Abhebe- als auch die Kontakt-Funktion zu gewährleisten; dadurch wird die Form der Batteriekontakteinrichtung vereinfacht. Nicht zuletzt wird die Zuverlässigkeit der eigentlichen An-/Aus-Funktion erhöht.

## Beschreibung

Die Erfindung betrifft ein Hörinstrument mit einem Batteriefachschalter, der ein Ein-/Aus-Schalten des Hörinstruments beim Schließen und Öffnen des Batteriefachs bewirkt. Zu diesem Zweck wird durch den Batteriefachschalter der elektrische Kontakt zur Batterie beim Schließen und Öffnen des Batteriefachs hergestellt und unterbrochen.

Hörinstrumente können beispielsweise als Hörgeräte ausgeführt sein. Ein Hörgerät dient der Versorgung einer hörgeschädigten Person mit akustischen Umgebungssignalen, die zur Kompensation bzw. Therapie der jeweiligen Hörschädigung verarbeitet und verstärkt sind. Es besteht prinzipiell aus einem oder mehreren Eingangswandlern, aus einer Signalverarbeitungseinrichtung, einer Verstärkungseinrichtung, und aus einem Ausgangswandler. Der Eingangswandler ist in der Regel ein Schallempfänger, z.B. ein Mikrofon, und/oder ein elektromagnetischer Empfänger, z.B. eine Induktionsspule. Der Ausgangswandler ist in der Regel als elektroakustischer Wandler, z. B. Miniaturlautsprecher, oder als elektromechanischer Wandler, z. B. Knochenleitungshörer, realisiert. Er wird auch als Hörer oder Receiver bezeichnet. Der Ausgangswandler erzeugt Ausgangssignale, die zum Gehör des Patienten geleitet werden und beim Patienten eine Hörwahrnehmung erzeugen sollen. Der Verstärker ist in der Regel in die Signal verarbeitungseinrichtung integriert. Die Stromversorgung des Hörgeräts erfolgt durch eine ins Hörgerätegehäuse integrierte Batterie. Die wesentlichen Komponenten eines Hörgeräts sind in der Regel auf einer gedruckten Leiterplatine als Schaltungsträger angeordnet bzw. damit verbunden.

Hörinstrumente können außer als Hörgeräte auch als sogenannte Tinnitus-Masker ausgeführt sein. Tinnitus-Masker werden zur Therapie von Tinnitus-Patienten eingesetzt. Sie erzeugen von der jeweiligen Hörbeeinträchtigung und je nach Wirkprinzip auch von Umgebungsgeräuschen abhängige akustische Ausgangssignale, die zur Verringerung der Wahrnehmung störender Tinnitus- oder sonstiger Ohrgeräusche beitragen können.

Hörinstrumente können weiter auch als Telefone, Handys, Headsets, Kopfhörer, MP3-Player oder sonstige Telekommunikations- oder Unterhaltungselektronik-Systeme ausgeführt sein.

Im folgenden sollen unter dem Begriff Hörinstrument sowohl Hörgeräte, als auch Tinnitus-Masker, vergleichbare derartige Geräte, sowie Telekommunikations- und Unterhaltungselektronik-Systeme verstanden werden.

Hörinstrumente, insbesondere Hörgeräte, sind in verschiedenen grundlegenden Typen bekannt. Bei ITE-Hörgeräten (In-the-Ear, auch IDO bzw. In-dem-Ohr) wird ein Gehäuse, das sämtliche funktionalen Komponenten einschließlich Mikrophon und Receiver enthält, mindestens teilweise im Gehörgang getragen. CIC-Hörgeräte (Completely-in-Canal) sind den ITE-Hörgeräten ähnlich, werden jedoch vollständig im Gehörgang getragen. Bei BTE-Hörgeräten (Behind-the-Ear, auch Hinter-dem-Ohr bzw. HDO) wird ein Gehäuse mit Komponenten wie Batterie und Signalverarbeitungseinrichtung hinter dem Ohr getragen und ein flexibler Schallschlauch, auch als Tube bezeichnet, leitet die akustischen Ausgangssignale eines Receivers vom Gehäuse zum Gehörgang, wo häufig ein Ohrstück am Tube zur zuverlässigen Positionierung des Tube-Endes im Gehörgang vorgesehen ist. RIC-BTE-Hörgeräte (Receiver-in-Canal Behind-the-Ear) gleichen den BTE-Hörgeräten, jedoch wird der Receiver im Gehörgang getragen und statt eines Schallschlauchs leitet ein flexibler Hörerschlauch elektrische Signale anstelle akustischer Signale zum Receiver, welcher vorne am Hörerschlauch angebracht ist, meist in einem der zuverlässigen Positionierung im Gehörgang dienenden Ohrstück. RIC-BTE-Hörgeräte werden häufig als sogenannte Open-Fit Geräte eingesetzt, bei denen zur Reduzierung des störenden Okklusions-Effekts der Gehörgang für den Durchtritt von Schall und Luft offen bleibt. Deep-Fit-Hörgeräte (Tief-Gehörgang-Hörgeräte) gleichen den CIC-Hörgeräten. Während CIC-Hörgeräte jedoch in der Regel in einem weiter außen (distal) liegenden Abschnitt des äußeren Gehörgangs getragen werden, werden Deep-Fit-Hörgeräte weiter zum Trommelfell hin (proximal) vorgeschoben und mindestens teilweise im innenliegenden Abschnitt des äußeren Gehörgangs getragen. Der außenliegende Abschnitt des Gehörgangs ist ein mit Haut ausgekleideter Kanal und verbindet die Ohrmuschel mit dem Trommelfell. Im außenliegenden Abschnitt des äußeren Gehörgangs, der sich direkt an die Ohrmuschel anschließt, ist dieser Kanal aus elastischem Knorpel gebildet. Im innenliegenden Abschnitt des äußeren Gehörgangs wird der Kanal vom Schläfenbein gebildet und besteht somit aus Knochen. Der Verlauf des Gehörgangs zwischen knorpeligem und knöchernem Abschnitt ist in der Regel in einem (zweiten) Knick abgewinkelt und schließt einen von Person zu Person unterschiedlichen Winkel ein. Insbesondere der knöcherne Abschnitt des Gehörgangs ist verhältnismäßig empfindlich gegen Druck und Berührungen. Deep-Fit-Hörgeräte werden zumindest teilweise im empfindlichen knöchernen Abschnitt des Gehörgangs getragen. Beim Vorschieben in den knöchernen Abschnitt des Gehörgangs müssen sie außerdem den erwähnten zweiten Knick passieren, was je nach Winkel schwierig sein kann. Zudem können kleine Durchmesser und gewundene Formen des Gehörgangs das Vorschieben weiter erschweren.

Neben den am oder im Ohr zu tragende Hörgerät-Typen mit akustischem Receiver sind auch Cochlea Implantate und Knochenleitungs-Hörgeräte (BAHA, Bone Anchored Hearing Aid) bekannt.

Allen Hörgerät-Typen ist gemein, dass möglichst kleine Gehäuse bzw. Bauformen angestrebt werden, um den Tragekomfort zu erhöhen, gegebenenfalls die Implantierbarkeit zu verbessern und gegebenenfalls die Sichtbarkeit des Hörgeräts aus kosmetischen Gründen zu reduzieren. Das Bestreben einer möglichst kleinen Bauform gilt ebenso für die meisten anderen Hörinstrumente.

Um eine kleine Bauform zu erreichen, ist es bekannt, Hörinstrumente nicht mit einem eigens vorgesehenen An-/AusSchalter auszustatten. Stattdessen wird ein elektrischer Kontakt zur Batterie durch Öffnen oder Schließen des Batteriefachs unterbrochen oder hergestellt. Hierfür können die ohnehin erforderlichen Batteriekontakte, üblicherweise als Metalllaschen ausgeführt, gleichzeitig die Aufgabe des An-/Aus-Kontakts übernehmen.

Um die An-/Aus-Funktion zu ermöglichen, sind die Batteriekontakte so geformt und angeordnet, dass mindestens einer davon durch eine entsprechende Kontur im Batteriefach beim Öffnen desselben von der Batterie abgehoben werden. Besagte Kontur ist elektrisch von der Batterie isoliert und zwischen den Batteriekontakten und der Batterie angeordnet. Sie hebt den Batteriekontakt gegen eine elastische Kraft von der Batterie ab. Diese elastische Kraft bewirkt eine erhöhte Reibung zwischen dem Batteriekontakt einerseits und der Batterie oder Kontur andererseits. Durch die Reibung wird die normalerweise im herausklappbaren Batteriefach angeordnete Kontur abgenutzt. Umgekehrt wird der Batteriekontakt dann, wenn die Kontur ihn nicht anhebt, elastisch auf die Batterie abgesenkt.

Die Aufgabe der Erfindung besteht darin, einen Batteriefachschalter für ein Hörinstrument anzugeben, der dauerhaft zuverlässig arbeitet und eine reduzierte Abnutzung, insbesondere durch Abschleifen oder Abreiben beim Betätigen, aufweist.

Die Erfindung löst diese Aufgabe durch einen Batteriefachschalter für ein Hörinstrument mit den Merkmalen des unabhängigen Patentanspruchs.

Ein Grundgedanke der Erfindung besteht in einem Batteriefachschalter für ein Hörinstrument, das Hörinstrument umfassend ein Gehäuse, ein in das Gehäuse hinein und heraus bewegbares Batteriefach, eine Batteriekontakteinrichtung mit einem Kontakt-Bereich zum elektrischen Kontaktieren einer in das Batteriefach eingelegten Batterie, wobei die Batteriekontakteinrichtung an einer der beiden Komponenten Gehäuse oder Batteriefach angeordnet ist, und eine an der anderen der beiden Komponenten Gehäuse oder Batteriefach angeordnete An-/Aus-Kontur zum Unterbrechen des elektrischen Kontakts zwischen Batteriekontakteinrichtung und Batterie beim Herausbewegen des Batteriefachs, wobei die An-/Aus-Kontur beim Herausbewegen des Batteriefachs mit einem Abhebe-Bereich der Batteriekontakteinrichtung wechselwirkt. Der Abhebe-Bereich und der Kontakt-Bereich sind voneinander getrennt angeordnet, und die An-/Aus-Kontur und die Batteriekontakteinrichtung sind derart ausgebildet, dass beim Herausbewegen des Batteriefachs die Kontakteinrichtung derart abgehoben wird, dass zwischen Kontakt-Bereich und An-/Aus-Kontur keine gegenseitige Reibung auftritt.

Der Grundgedanke besteht demnach darin, eine im Bereich des Batteriefachs vorgesehene An-/Aus-Kontur und einen entsprechend geformte Batteriekontakteinrichtung zu verwenden, deren Gestalt so aufeinander abgestimmt ist, dass der Abhebe-Bereich zum Abheben der Batteriekontakteinrichtung von der Batterie und der Kontakt-Bereich der Batteriekontakteinrichtung voneinander getrennt sind. Die Batteriekontakteinrichtung hat demnach zwei spezielle, voneinander getrennte Bereiche, einen Abhebe-Bereich und einen Kontakt-Bereich. Beide Bereiche können jeweils eigens gestaltet werden, um auf der einen Seite die Abnutzung der An-/Aus-Kontur zu reduzieren und auf der anderen Seite eine sichere elektrische Kontaktierung der Batterie dauerhaft zu gewährleisten.

Durch die Erfindung kann vorteilhafter Weise ein Abhebe-Bereich großer Fläche vorgesehen werden, wodurch der mechanische Druck auf die An-/Aus-Kontur auf eine größere Fläche verteilt und somit reduziert wird; dadurch wird der Reibungsverschleiß verringert. Durch eine geeignete Gestaltung der An-/Aus-Kontur kann zudem eine einzige Ausformung in der Batteriekontakteinrichtung ausreichend sein, um sowohl die Abhebe- als auch die Kontakt-Funktion zu gewährleisten; dadurch wird die Form der Batteriekontakteinrichtung vereinfacht. Weiter wird ein reduzierter Biegewinkel für das Abheben der Batteriekontakteinrichtung ermöglicht, was die Verwendung einer vergrößerten Anzahl von Materialien mit geringerer Biegesteifheit ermöglicht. Nicht zuletzt wird die Zuverlässigkeit der eigentlichen An-/Aus-Funktion erhöht.

Eine vorteilhafte Weiterbildung des Grundgedankens besteht darin, dass die Batteriekontakteinrichtung als leifähige elastische Lasche ausgeführt ist.

Eine weitere vorteilhafte Weiterbildung des Grundgedankens besteht darin, dass der Kontakt-Bereich und der Abhebe-Bereich der Batteriekontakteinrichtung mittels einer gemeinsamen Auswölbung der Lasche gebildet sind. Dadurch ergibt sich ein geringerer Komplexitätsgrad der Batteriekontakteinrichtung, was diese zuverlässiger macht. Zudem wird durch die geringere Komplexität auch die Fertigung vereinfacht.

Eine weitere vorteilhafte Weiterbildung des Grundgedankens besteht darin, dass die An-/Aus-Kontur einen ersten Kontur-Bereich aufweist, in dem die Wechselwirkung mit dem Abhebe-Bereich der Batteriekontakteinrichtung derart minimiert ist, dass der Kontakt-Bereich die Batterie kontaktieren kann, und einen zweiten Kontur-Bereich, der mit dem Abhebe-Bereich derart wechselwirkt, dass ein Abheben des Kontakt-Bereichs von der Batterie bewirkt wird.

Eine weitere vorteilhafte Weiterbildung des Grundgedankens besteht darin, dass der zweite Kontur-Bereich eine Ausnehmung oder Vertiefung zur berührungsfreien Aufnahme des Kontakt-Bereichs aufweist. Dadurch wird Reibung verhindert, die den Kontakt-Bereich abnutzen und dessen elektrische Leitfähigkeit beeinträchtigen könnte.

Eine weitere vorteilhafte Weiterbildung des Grundgedankens besteht darin, dass das Batteriefach in einer Achse schwenkbar im Gehäuse gelagert ist, so dass es durch Schwenken um die Achse in das Gehäuse hinein und aus diesem heraus bewegbar ist, und wobei der zweite Kontur-Bereich entlang einer zu der Achse konzentrischen Kreisbahn verläuft. Durch die Ausgestaltung mit der Form einer konzentrischen Kreisbahn ist gewährleistet, dass der Kontakt-Bereich der Batteriekontakteinrichtung beim Schwenken des Batteriefachs in der Ausnehmung oder Vertiefung verbleibt, die im zweiten Kontur-Bereich gebildet ist. Somit wird beim Schwenken des Batteriefachs Reibung am Kontakt-Bereich verhindert.

Weitere vorteilhafte Ausgestaltungen ergeben sich aus den abhängigen Patentansprüchen sowie aus der nachfolgenden Beschreibung von Ausführungsbeispielen anhand von Figuren. Die Figuren zeigen:
- Fig 1: Hörinstrument
- Fig 2: Batteriekontakteinrichtung
- Fig 3: Batteriekontakteinrichtung und An-/Aus-Kontur
- Fig 4: Batteriekontakteinrichtung und An-/Aus-Kontur
- Fig 5: Batteriefach hinein geschwenkt
- Fig 6: Batteriefach heraus geschwenkt
- Fig 7: Batteriekontakteinrichtung
- Fig 8: Batteriekontakteinrichtung und An-/Aus-Kontur
- Fig 9: Batteriekontakteinrichtung und An-/Aus-Kontur
- Fig 10: Batteriefach hinein geschwenkt
- Fig 11: Batteriefach heraus geschwenkt

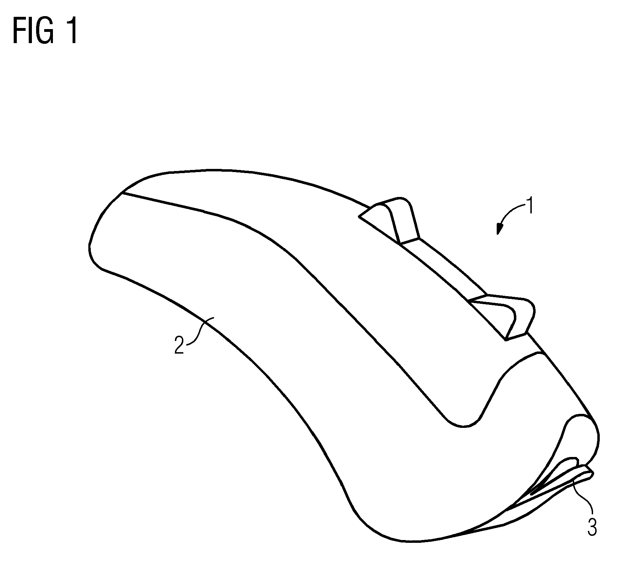

**In** **Fig 1** ist ein Hörinstrument 1 perspektivisch dargestellt. Es handelt sich um ein BTE-Hörgerät mit Gehäuse 2 und Batteriefach 3. Soweit dargestellt handelt es sich um ein herkömmliches BTE-Hörgerät, wobei in der Abbildung der Hörschlauch, der bestimmungsgemäß zum Ohr führt, nicht dargestellt ist. Im Inneren des Gehäuses 2 beziehungsweise Batteriefachs 3 ist eine Ausführungsform eine Batteriekontakteinrichtung gemäß der Erfindung angeordnet, wie sie in Zusammenhang mit den nachfolgenden Figurenbeschreibungen erläutert wird.

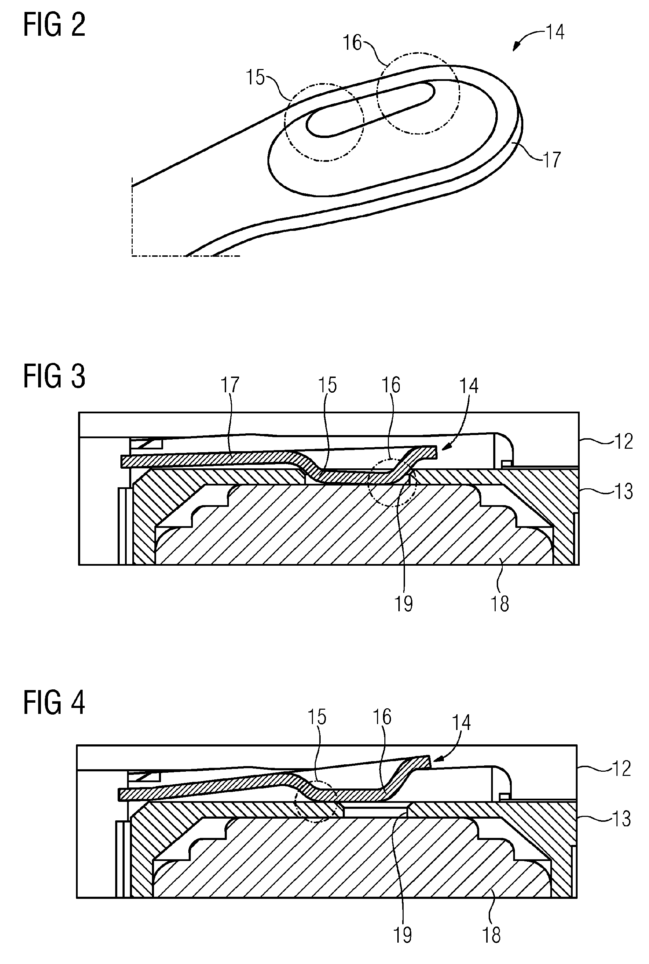

**In** **Fig 2** ist eine Batteriekontakteinrichtung 14 perspektivisch dargestellt. Die Batteriekontakteinrichtung 14 weist eine längliche Auswölbung auf, die in die elastische, leitfähige Lasche 17 eingeformt ist. Die elastische, leitfähige Lasche 17 kann aus herkömmlich zur Kontaktierung von Batterien verwendeten Materialien bestehen, zum Beispiel aus einem federnden Metall. Die Auswölbung in der Lasche 17 bildet eine Erhebung, die einen Kontakt-Bereich 16 und einen daneben getrennt angeordneten Abhebe-Bereich 15 umfasst. Der Kontakt-Bereich 16 dient dem Kontaktieren einer Batterie und der Abhebe-Bereich 15 dient dem Abheben des Kontakt-Bereichs 16 von der Batterie. Die Funktion des Abhebe-Bereichs 15 und des Kontakt-Bereichs 16 wird anhand der nachfolgenden Figuren näher erläutert.

**In** **Fig 3** ist ein Ausschnitt eines Querschnitts eines Hörinstruments mit Batteriekontakteinrichtung 14 und An-/Aus-Kontur 19 dargestellt. Die Lasche 17 ist derart auf die Batterie 18 abgesenkt, dass der Kontakt-Bereich 16 die Batterie 18 berührt und somit der elektrische Kontakt hergestellt ist. Der Abhebe-Bereich 15 ist nicht oder allenfalls unwesentlich in Wechselwirkung mit der An-/Aus-Kontur 19 des Batteriefachs 13.

Das Batteriefach 13 ist im Gehäuse 12 des Hörinstruments angeordnet und kann aus diesem heraus- und hineinbewegt werden. Für das Zusammenwirken der Batteriekontakteinrichtung 14 und der An-/Aus-Kontur 19 ist es von untergeordneter Bedeutung, ob das Batteriefach 13 in das Gehäuse 12 geschoben, geschwenkt oder anderweitig hinein- und herausbewegt wird. Die dargestellte Ausführungsform stellt ein schwenkbares Batteriefach 13 dar, wie nachfolgend ersichtlich wird. In der Abbildung ist das Batteriefach 13 vollständig in das Gehäuse 12 hineinbewegt. Der durch die An-/Aus-Kontur 19 und die Batteriekontakteinrichtung 14 gebildete Batteriefachschalter ist geschlossen und der elektrische Kontakt zur Batterie 18 hergestellt. Somit ist das Hörinstrument eingeschaltet.

**In** **Fig 4** ist der vorangehende Ausschnitt erneut dargestellt, jedoch ist das Batteriefach 13 nicht vollständig in das Gehäuse 12 hineinbewegt. Es ist vielmehr weit genug aus dem Gehäuse 12 herausgeschwenkt, um das Hörinstrument auszuschalten. Für diese Stellung des Batteriefachs 13 kann in herkömmlicher Weise eine Rastung vorgesehen sein, die verhindert, dass das Batteriefach 13 vollständig aus dem Gehäuse 12 herausschwenkt. Diese Rastung hilft zu verhindern, dass das Batteriefach 13 unbeabsichtigt herausschwenkt und die Batterie 18 ungewollt herausfallen kann.

Die An-/Aus-Kontur 19 ist in der dargestellten Stellung des Batteriefachs 13 in Wechselwirkung mit dem Abhebe-Bereich 15 der Batteriekontakteinrichtung 14. Dadurch wird die Batteriekontakteinrichtung 14 wie dargestellt angehoben, wodurch der Kontakt-Bereich 16 von der Batterie 18 abgehoben wird. Der elektrische Kontakt zur Batterie ist mithin unterbrochen. Um in dieser Stellung des Batteriefachs 13 beziehungsweise der Batteriekontakteinrichtung 14 sicherzustellen, dass kein unerwünschter elektrischer Kontakt zur Batterie 18 verbleibt, ist die An-/Aus-Kontur 19 beziehungsweise das Batteriefach 13 aus elektrisch isolierendem Material hergestellt. Hierfür können herkömmliche Materialien verwendet sein, zum Beispiel Kunststoff.

Der durch die Batteriekontakteinrichtung 14 und die An-/Aus-Kontur 19 gebildete Batteriefachschalter unterbricht somit den Kontakt zur Batterie 18 und das Hörinstrument ist ausgeschaltet.

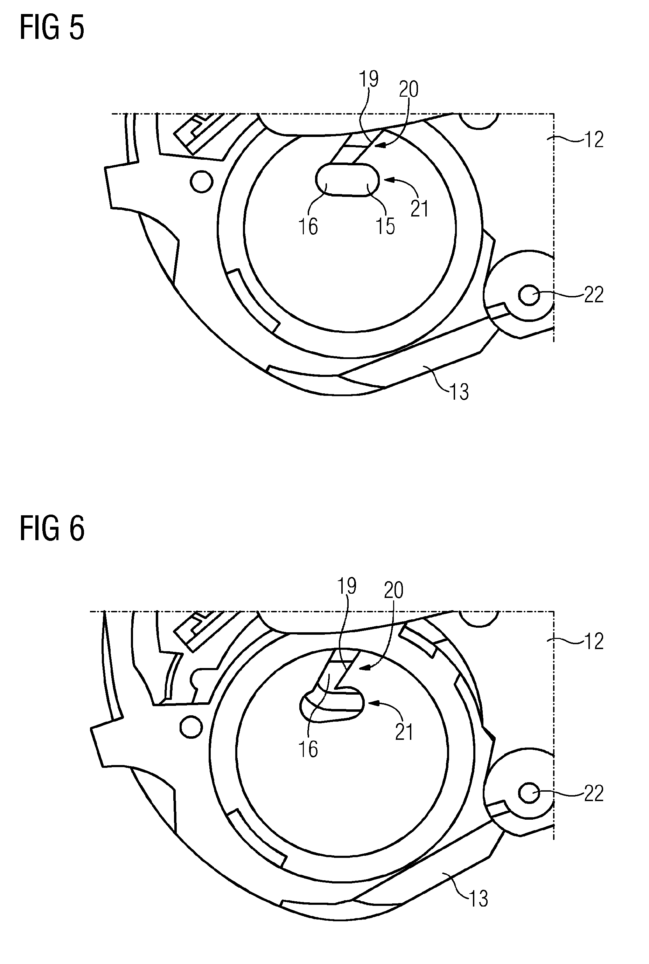

**In** **Fig 5** ist das Batteriefach 13 samt Gehäuse 12 in Draufsicht dargestellt. Diejenigen Teile des Gehäuses 12, die eine Draufsicht auf das Batteriefach 13 verhindern würden, sind in der Abbildung weggelassen. Das Batteriefach 13 ist vollständig in das Gehäuse 12 hineingeschwenkt. Demnach ist das Hörinstrument eingeschaltet. Die Schwenkbewegung des Batteriefachs 13 erfolgt um die Achse 22, durch die es schwenkbar im Gehäuse 12 gelagert ist.

Von der Batteriekontakteinrichtung ist im Wesentlichen nur die Auswölbung mit Abhebe-Bereich 15 und Kontakt-Bereich 16 erkennbar. Die An-/Aus-Kontur 19 ist mindestens teilweise als Öffnung im Batteriefach 13 ausgeführt, so dass durch diese Öffnung hindurch eine in der Abbildung nicht dargestellte Batterie durch den Kontakt-Bereich 16 kontaktiert werden kann. Die Batterie würde in der dargestellten Ansicht über dem Kontakt-Bereich 16 liegen und diesem somit verdecken.

Die An-/Aus-Kontur 19 umfasst einen Kontur-Bereich 21, dessen Form im Wesentlichen kongruent zur Form der Auswölbung der Batteriekontakteinrichtung ist. Wesentlich an der Form des Kontur-Bereichs 21 ist, dass sie zum einen den elektrischen Kontakt des Kontakt-Bereichs 16 zur Batterie zulässt, und zum anderen dass sie eine Wechselwirkung zwischen dem Abhebebereich 15 vermeidet, die zum Abheben des Kontakt-Bereichs 16 von der Batterie führen würde. Zu diesem Zweck ist es nicht erforderlich, dass der Kontur-Bereich 21 kongruent zur Auswölbung der Batteriekontakteinrichtung ist, wie es in der Abbildung dargestellt ist. Stattdessen könnte der Kontur-Bereich 21 auch als größere, anders geformte Öffnung ausgeführt sein.

Die An-/Aus-Kontur 19 umfasst einen weiteren Kontur-Bereich 20, der in der dargestellten Schwenkposition des Batteriefachs 13 keine Funktion für den Batteriefachschalter ausübt. Der Kontur-Bereich 20 ist im Wesentlichen entlang einer zur Achse 22 konzentrischen Kreisbahn erstreckt. Es ist ersichtlich, dass der Kontakt-Bereich 16 beim Herausschwenken des Batteriefachs 13 (in der Abbildung gegen den Uhrzeigersinn) im Wesentlichen von der Öffnung überstrichen wird, die im Konturbereich 20 vorgesehen ist.

**In** **Fig 6** ist die vorangehende Abbildung mit geänderter Stellung des Batteriefachs 13 erneut wiedergegeben. Das Batteriefach 13 ist aus dem Gehäuse 12 soweit herausgeschwenkt, dass das Hörinstrument durch die Batteriefachschalter ausgeschaltet ist.

Die Auswölbung der mit dem Gehäuse 12 verbundenen Batteriekontakteinrichtung wird beim Herausschwenken des Batteriefachs 13 von der mit dem Batteriefach 13 verbundenen An-/Aus-Kontur 19 überstrichen. Dadurch entsteht eine Wechselwirkung zwischen dem Kontur-Bereich 20 und dem Abhebe-Bereich 19, die zum Abheben der Batterie-Kontakteinrichtung von der Batterie führt. Mithin ist der Kontakt-Bereich 16 nicht mehr im elektrischen Kontakt mit der Batterie. In der dargestellten Perspektive ist die Batteriekontakteinrichtung also nach unten in die Zeichnungsebene hineingeschwenkt. Es ist ersichtlich, dass der Kontakt-Bereich 16 in der im Konturbereich 20 vorgesehenen Öffnung angeordnet ist. Dadurch wird mechanische Reibung zwischen dem Kontakt-Bereich 16 und der An-/Aus-Kontur 19 beziehungsweise dem Batteriefach 13 vermieden. Dadurch wird ein Verschleißen des Kontaktbereichs 16 verhindert. Dies wird im Wesentlichen dadurch ermöglicht, dass das Abheben der Batteriekontakteinrichtung, welches durch mechanische Wechselwirkung mit dem Abhebe-Bereich 15 bewirkt wird, durch den vom Kontakt-Bereich 16 getrennt angeordneten Abhebe-Bereich 15 bewirkt wird. Der beim mechanischen Abheben unausweichlich auftretende mechanische Verschleiß ist somit auf den Abhebe-Bereich 15 verlagert. Dies ermöglicht eine Gestaltung des Abhebe-Bereichs 15 einerseits und des Kontakt-Bereichs 16 andererseits für den jeweiligen eigenen Zweck. Entsprechend ist der Kontur-Bereich 20 so ausgebildet, dass mechanischer Verschleiß des Batteriefachs 13 im Kontur-Bereich 20 minimiert ist. Hierzu kann zum einen eine Form gewählt werden, die die mechanischen Kräfte auf eine große Fläche überträgt, wodurch der Druck zwischen den Komponenten reduziert und somit auch die Reibung reduziert wird, zum anderen können geeignete Materialien mit entsprechender Härte und entsprechendem Reibwert verwendet werden.

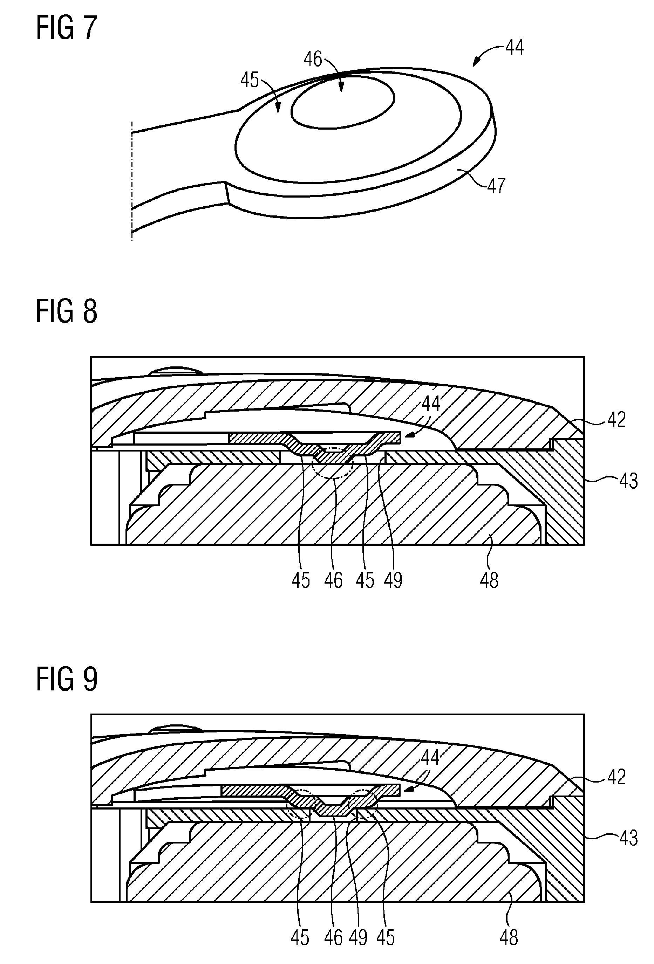

**In** **Fig 7** ist eine Batteriekontakteinrichtung 44 in anderer Ausführungsform dargestellt. Die Aufwölbung der Lasche 44 ist kreisrund. Der Kontakt-Bereich 46 stellt die höchste, zentrale Komponente der Auswölbung dar, um die herum der Abhebebereich 45 konzentrisch angeordnet ist.

**In** **Fig 8** ist ein Ausschnitt eines Hörinstruments als Schnittbild dargestellt. In dem Ausschnitt ist die vorangehend dargestellte Ausführungsform der Batterieeinrichtung 44 eingesetzt. Das Batteriefach 43 ist vollständig in das Gehäuse 42 hineingeschwenkt, so dass das Hörinstrument eingeschaltet ist. Der Kontakt-Bereich 46 ist mit der Batterie 48 in elektrischem Kontakt. Die An-/Aus-Kontur 49 ist nicht in Wechselwirkung mit dem Abhebe-Bereich 45. Somit ist die Batteriekontakteinrichtung 44 auf die Batterie 48 abgesenkt.

**In** **Fig 9** ist der vorangehend dargestellte Ausschnitt erneut abgebildet, jedoch mit in Aus-Position herausgeschwenktem Batteriefach 43. Durch das Herausschwenken des Batteriefachs 43 ist die An-/Aus-Kontur 49 in mechanische Wechselwirkung mit dem Abhebe-Bereich 45 getreten. Dadurch wird die Batteriekontakteinrichtung 44 so von der Batterie 48 abgehoben, dass der elektrische Kontakt zwischen der Batterie 48 und dem Kontakt-Bereich 46 unterbrochen ist. Hierdurch ist das Hörinstrument durch den von der Batteriekontakteinrichtung 44 und der An-/Aus-Kontur 49 gebildeten Batteriefachschalter abgeschaltet.

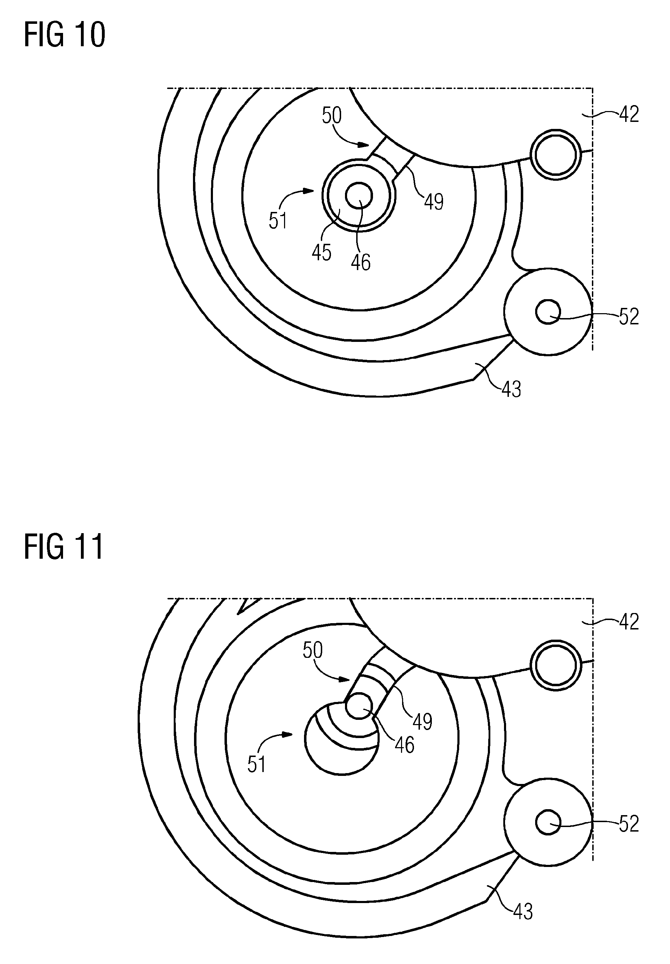

**In** **Fig 10** ist die Ausführungsform mit kreisrundem Kontaktbereich 46 und konzentrisch kreisrundem Abhebebereich 45 in Draufsicht und ohne Batterie dargestellt. Teile des Gehäuses 42, die den Blick auf die Kontakt-Einrichtung verdecken würden, sind weggelassen. Dass Batteriefach 43 ist vollständig in das Gehäuse 42 hineingeschwenkt. Die durch Kontakt-Bereich 46 und Abhebe-Bereich 45 gebildete Auswölbung der Batteriekontakteinrichtung befindet sich in dem Kontur-Bereich 51, in dem die Batteriekontakteinrichtung abgesenkt und der elektrische Kontakt des Kontakt-Bereichs 46 zur Batterie hergestellt ist. Obwohl der Kontur-Bereich 51 im Wesentlichen kongruent zur Auswölbung der Batteriekontakteinrichtung ausgeführt ist, kann er auch größere und andere Form haben. Wesentlich für die Gestaltung des Kontur-Bereichs 51 ist lediglich, dass zum einen die Batteriekontakteinrichtung nicht oder allenfalls unwesentlich abgehoben ist, und zum anderen, dass der elektrische Kontakt zwischen Kontakt-Bereich 46 und der in der Abbildung darüber anzuordnenden Batterie ermöglicht ist.

**In** **Fig 11** ist der vorangehende Ausschnitt erneut dargestellt, jedoch mit in Aus-Position herausgeschwenktem Batteriefach 43. Der Kontur-Bereich 50 der An-/Aus-Kontur 49 ist in dieser Stellung des Batteriefachs 43 in Wechselwirkung mit dem Abhebe-Bereich 45 der Batterie-Kontakteinrichtung. Dadurch wird diese von der Batterie abgehoben, so dass der elektrische Kontakt zwischen dem Kontaktbereich 46 und der Batterie unterbrochen ist. Mithin ist das Hörinstrument durch den durch die An-/Aus-Kontur 49 und die Batteriekontakteinrichtung gebildeten Batteriefachschalter ausgeschaltet.

Es ist weiter ersichtlich, dass der Kontakt-Bereich 46 in der Öffnung im Kontur-Bereich 50 angeordnet ist, so dass er keinerlei Reibung ausgesetzt ist. Wesentlich daran ist das Verhindern von Reibungsverschleiß, wozu anstelle einer Öffnung im Konturbereich 50 eine auch ausreichend tiefe Vertiefung vorgesehen sein kann.

Dadurch, dass Reibungskräfte nicht auf den Kontakt-Bereich 46 einwirken, ist dessen mechanischer Verschleiß reduziert. Mechanische Kräfte sind stattdessen auf den davon getrennten Abhebebereich 45 verlagert, der entsprechend zur Optimierung der mechanischen Eigenschaften und Minimierung des Reibungsverschleißes ausgestaltet sein kann. Auf der Seite der An-/Aus-Kontur 49 greifen mechanische Kräfte vor allem im Kontur-Bereich 50 an, der mit dem Abhebe-Bereich 45 in Wechselwirkung tritt. Dieser Kontur-Bereich 50 kann dementsprechend zum einen großflächig gestaltet werden, um den Druck und somit Reibungskräfte zwischen dem Kontur-Bereich 50 und dem Abhebe-Bereich 45 zu minimieren. Zum anderen kann der Kontur-Bereich 50 aus Materialien mit geeigneter Härte und Reibungskoeffizienten hergestellt sein.

## Patentansprüche

1. Batteriefachschalter für ein Hörinstrument (1) umfassend
- ein Gehäuse (2,12,42),
- ein in das Gehäuse (2,12,42) hinein und heraus bewegbares Batteriefach (3,13,43),
- eine Batteriekontakteinrichtung (14,44) mit einem Kontakt-Bereich (16,46) zum elektrischen Kontaktieren einer in das Batteriefach (3,13,43) eingelegten Batterie (18,48), wobei die Batteriekontakteinrichtung (14,44) an einer der beiden Komponenten Gehäuse (2,12,42) oder Batteriefach (3,13,43) angeordnet ist, und
- eine an der anderen der beiden Komponenten Gehäuse (2,12,42) oder Batteriefach (3,13,43) angeordnete An-/Aus-Kontur (19,49) zum Unterbrechen des elektrischen Kontakts zwischen Batteriekontakteinrichtung (14,44) und Batterie (18,48) beim Herausbewegen des Batteriefachs (3,13,43), wobei die An-/Aus-Kontur (19,49) beim Herausbewegen des Batteriefachs (3,13,43) mit einem Abhebe-Bereich (15,45) der Batteriekontakteinrichtung (14,44) wechselwirkt,
**dadurch gekennzeichnet,**
**dass** der Abhebe-Bereich (15,45) und der Kontakt-Bereich (16,46) voneinander getrennt angeordnet sind, und
**dass** die An-/Aus-Kontur (19,49) und die Batteriekontakteinrichtung (14,44) derart ausgebildet sind, dass beim Herausbewegen des Batteriefachs (3,13,43) die Batteriekontakteinrichtung (14,44) derart abgehoben wird, dass zwischen Kontakt-Bereich (16,46) und An-/Aus-Kontur (19,49) keine gegenseitige Reibung auftritt.

2. Batteriefachschalter nach Anspruch 1, wobei die Batteriekontakteinrichtung (14,44) als leifähige elastische Lasche (17,47) ausgeführt ist.

3. Batteriefachschalter nach Anspruch 2, wobei der Kontakt-Bereich (16,46) und der Abhebe-Bereich (15,45) der Batteriekontakteinrichtung (14,44) mittels einer gemeinsamen Auswölbung der Lasche (17,47) gebildet sind.

4. Batteriefachschalter nach einem der vorhergehenden Ansprüche, wobei die An-/Aus-Kontur (19,49) einen ersten Kontur-Bereich (21,51) aufweist, in dem die Wechselwirkung mit dem Abhebe-Bereich (15,45) der Batteriekontakteinrichtung (14,44) derart minimiert ist, dass der Kontakt-Bereich (16,46) die Batterie (18,48) kontaktieren kann, und einen zweiten Kontur-Bereich (20,50), der mit dem Abhebe-Bereich (15,45) derart wechselwirkt, dass ein Abheben des Kontakt-Bereichs (16,46) von der Batterie (18,48) bewirkt wird.

5. Batteriefachschalter nach Anspruch 4, wobei der zweite Kontur-Bereich (20,50) eine Ausnehmung oder Vertiefung zur berührungsfreien Aufnahme des Kontakt-Bereichs (16,46) aufweist.

6. Batteriefachschalter nach Anspruch 5, wobei das Batteriefach (3,13,43) in einer Achse (22,52) schwenkbar im Gehäuse (2,12,42) gelagert ist, so dass es durch Schwenken um die Achse (22,52) in das Gehäuse (2,12,42) hinein und aus diesem heraus bewegbar ist, und wobei der zweite Kontur-Bereich (20,50) entlang einer zu der Achse (22,52) konzentrischen Kreisbahn verläuft.
